# EUROPEAN PATENT APPLICATION

(11) **EP 2 713 561 A1**
(43) Date of publication of application: **02.04.2014**
(21) Application number: 12250158.8
(22) Date of filing: 28.09.2012
(51) Int. Cl.: H04L 12/28

(54) **Installation of network services**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

A router 1 for a local network 24 is arranged to configure data processing devices 2 connected to the network 24 to operate predetermined network-based functions, such as parental control or troubleshooting functions. The router 1 identifies a data processing device 2 when it attempts connection to a wide area network 25 via the router 1 and determines, from characteristics of the data processing device 2 and stored data 141, 143 relating to devices that have previously connected in this way, whether the data processing device requires such configuration.

The stored data 141, 143, may identify devices that have previously connected to the router 1 by the same or a different interface as not requiring reconfiguration unless it is recorded (142) that a upgrade to the service has been made since the most recent reconfiguration. Devices not suitable for operating the network based services (e.g passive monitors with no user interface), can also be identified as not requiring the configuration process.

If the data processing device requires configuration, a packet forwarding system 15 redirects the current communications data session between the data processing device 2 and the external network 25 to an installation application 16, which interacts with a network based portal 20 to install the network-based functions, before restoring the requested session.

## Description

This invention relates to the installation on a personal computer, or other information processing device, of software services suitable for use when the device is to be connected to a data network such as a local area network, or the "Internet". Such software is often provided by a service provider to configure the user's computer to operate as the "client" end of a service provided by the, or another, service provider.

Typical services made available in this way facilitate the use made of the data network, or provide information which may be of use in troubleshooting, or provide anti-virus protection, or allow access to the network to be controlled. Examples of access control include parental controls to restrict the times that access is permitted, or to restrict the type of sessions that are permitted.

The software to operate such services is usually provided to the user on a read-only compact disc (CD-ROM) or other carrier supplied with a modem which is to be used for connection to the data network. Such modems are commonly combined with the capability to control a local area network interconnecting several terminals, as well as connecting those terminals with the external network, and are also known as "routers".

However, take-up of such services is relatively low: the applicant's market research suggests that only 53% of users install the software from the CDs provided with their routers. In many of these cases, although there may be several terminals connected to the router, the software will only be installed on one of them. There may be several reasons for this.

Alternatively, the services are provided to the user on line, over a data network such as the Internet. However, in general the services are only offered to the first personal computer or other information processing device to connect to the "Internet" via the modem/router - before the information processing device is permitted full service to the "Internet". Once the first information processing device has undertaken the operations defined by the service provider to establish an Internet connection to that router, the service provider does not automatically offer the service again to that device, nor to any other device connected to the "Internet" via the same modem/router.

Terminals suitable for network connection are generally provided with a generic driver present in the terminal, which will implement a basic connection to the modem (router). The user may find this default arrangement is adequate for his immediate purposes, and may not be motivated to go through the installation process for the additional services. Many users setting up a new computer may prioritise other tasks ahead of installation of the additional services, and in practice may never actually install them at all. Even if the user does install the services, the settings may be lost if they are over-written, for example during an update of the operating system. Moreover, when a new device is subsequently connected to the local area network, it may not be possible to install the implementation software if the CD-ROM has been mislaid or damaged

Moreover, the current CD-based installation software process is not suitable for devices without a CD drive, e.g. tablet computers, Smartphones, Netbooks.

This situation results in low take-up of useful services offered by the service provider, such as troubleshooting applications, and parental control.

The present invention aims to make the installation software readily accessible to all suitable devices by automatically initiating the implementation of such services. This is achieved by allowing access to generic web pages via a HTML browser. According to the invention, there is provided a network connection device (e.g. a modem/router) for connection of one or more data processing devices to a data network, the network connection device being arranged to configure the data processing devices to operate predetermined functions, the network connection device comprising:
a detection processor arranged to identify data processing devices that require such configuration when they attempt connection to an external network via the network connection device and the data network,
an installation processor for controlling a communications data session with the data processing device to configure the device to operate the predetermined functions, the configuration process being determined in accordance with the identified characteristics of the data processing device.

The installation processor may be arranged to load a further installation processor onto the data processing device such that when executed on the device it installs software on the data processing device to support or provide the services.

According to another aspect there is provided a method for configuring a data processing device to operate predetermined functions, **characterised in that** the configuration of the data processing device is performed under the control of a network connection device when the data processing device establishes connection with the network connection device over a data network, and wherein the network connection device
identifies a data processing device when it attempts connection to an external network via the network connection device and the data network,
determines, from characteristics of the data processing device and stored data relating to the device, whether the data processing device requires such configuration,
and, if the data processing device requires configuration, redirects a communications data session with the data processing device to configure the device to operate the predetermined functions, the configuration process being determined in accordance with the identified characteristics of the data processing device.

The external network is typically a wide area network or other network segment.

The stored data may relate to a specified device but more typically will relate to a class of device, the characteristics or identity of the device to be identified on connection being sufficient to determine the class to which it belongs.

The method may include a step for determining whether the connection between the user,device and the network connection device is suitable to be used to initiate a communications session for the configuration process

In a preferred embodiment, the network connection device stores data relating to data processing devices that have previously been connected and determines, from the stored data, whether a data processing device currently attempting connection requires configuration, or does not require configuration, for example because it has already been configured, or is unsuitable for configuration. A requirement for configuration may arise because the data processing device has not been connected to the network connection device before, or because an updated configuration has become available since the most recent connection between the data processing device and the network connection device. Program data for the configuration process may be downloaded by the network connection device from a remote server over a wide area network connection. If the data stored by the network connection device in respect of a data communications device indicates that it has not been connected to the network connection device since the most recent download of data from a remote server, the configuration process is performed.

As some data processing devices may be unsuitable for such configuration processes, for example some peripheral equipment, the network connection device may analyse data received from the data processing devices, and determine from the data received whether the data processing device is of a type requiring configuration. In case the data processing device or connection is unsuitable, the network processing device performs no operation to the device. The network processing device may be arranged to store this information about the unsuitable device or connection, to avoid repeated attempts.

In one preferred arrangement, the session initiated by the network connection device is a session between the data communications device and a remote server, the remote server being connected to the network connection device over a wide area network and the data communications device being connected to the network connection device over a local access network.

The configuration process may include one or more user-controlled options.

The invention may be implemented in software, for example in the form of a suite of one or more computer programs operable in a network connection device and arranged to implement steps in the method defined above. These steps may include the downloading of further computer programs to the data processing device, embodying the process steps to be performed by that device.

The term "network connection device" is used here to mean a modem or other device used to connect one or more user terminals to a data network such as the internet (referred to herein as a wide area network or WAN) and/or to each other over a local area network (LAN). Connection between the terminals and the network connection device may be wireless (WLAN), or wired using e.g.Ethernet, powerline or other connections.

The functions required for the online installation process can be installed on the router as software. At a certain point of the process of connection to the terminal, the router directs connection of the terminal to a portal in an online server (referred to herein as a VAS portal - Value Added Service portal) that will continue and conclude the online installation process begun by the router.

The invention can provide a range of services to the terminals. In particular, the network service provider does not need to have visibility of the terminals in order for the services to be delivered to the terminals. Moreover the invention allows online installation to be applied to terminals of types introduced subsequent to the manufacture of the router itself, provided that the VAS portal can be updated as new types are introduced.

The invention can be arranged to instruct the installation processor to provide installation and configuration data specific to a particular class of devices. A device class may be defined e.g. by manufacturer, or by Operating System. It may also depend on manual inputs to the device e.g. passwords.

Preferably the router is configured to provide the online installation process to each suitable device when it connects to the router for the first time, while ensuring that unsupported devices, and devices that have gone through the installation process already, are not affected. This is advantageous as it is not always possible for the network to recognise whether a terminal is newly connected to the system - it may for instance be an existing terminal connecting to a different port in the router. It is also desirable that installation of such services is not attempted for networked devices that may be connected to the LAN but do not have a suitable browser application, other programmatic graphical user interface, or other installation capability and are therefore not suited for the installation of the services offered by the process of the invention. Such devices may include some, but not all, types of cameras, motion sensors, printers, game consoles, Internet Radios, Audio-visual Receivers, and other peripheral devices.

The installation process can be customised for individual device classes, devices or users (e.g. using the user's login details), according to the individual users' eligibility, and what is appropriate for the device they are using at that time.

The installed processes can also be used to ensure that a user actively chooses whether to opt in or out of services such as parental control.

If new services, or updates to existing ones, are launched by the service provider, the service provider can programme the router to identify devices suitable for the new or updated service, and the router can then deliver, or initiate delivery of, the new or updated service to any of the individual user terminals that require it when they next connect to or via the router.

In a preferred arrangement the installation processor detects whether a terminal making connection with the router already has the services installed, and only attempts to install the services where it detects that it is not already the case. This reduces signalling overhead and connection time for terminals which have previously been connected to the router, and ensures that stored preferences are preserved, but prevents an unauthorised user from modifying or un-installing services implemented on a particular terminal, for example to over-ride restrictions such as parental controls.

In a preferred arrangement the detection and installation processors detect a device making a connection using a communication interface (e.g. WLAN, or wired ethernet), determines if that device has previously had the services installed using a different communication interface, and only attempts to install the services if it detects that they are not already installed. This reduces the connection time and processing overhead for devices which have previously been connected to the router.

The functionality required in the router for the online installation process will now be described with reference to the drawings, in which:
Figure 1 provides an overview of the functional elements installed on the router to operate the installation process.
Figure 2 is a flow chart depicting the processes performed when the router detects connection of a new device to the local network
Figure 3 is a flow chart depicting the processes performed in order to download the installation process to the user terminal.

Certain operations which form a part of the process of the invention will not be discussed in detail because their operation is conventional. These include user authentication, selection of services, download and installation.

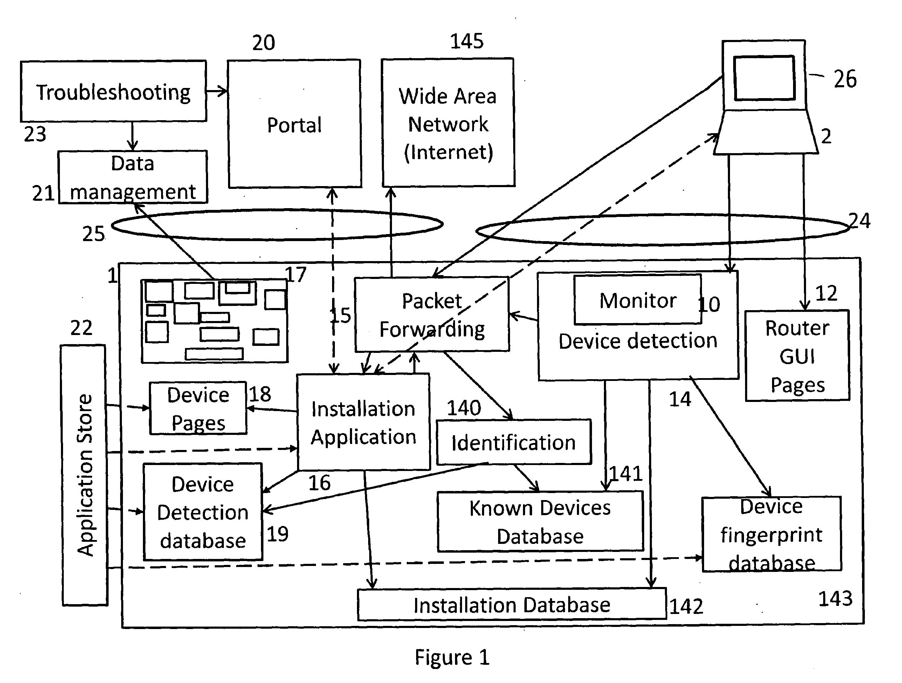

Figure 1 depicts a router 1 connected through an access network 25 to the "Internet" and a network operator VAS portal 20. The portal may be connected to the access network 25 as a Service provider special entity, as shown. Alternatively, it may be accessible via the Internet 145.

The router 1 is also connected through a local area network (LAN) 24 to one or more user terminals 2. Each such user terminal has a browser application 26. The local area network may include fixed line connections such as Ethernet or powerline, or wireless connections (WLAN), or a combination of both.

The functional elements of the router relevant to the present invention, which may typically be embodied in a suitably programmed processor, will now be identified. The functions operated by the router include device detection, device redirection, installation of functions such as troubleshooting and support of user-selected choices such as parental control functions. The VAS portal may be used to allow to add additional 'rich' content to the installation GUI.

As shown in Figure 1, a packet forwarding processor 15 mediates the various data packets received over the LAN 24. A monitor 10 comprising one or more servers is configured to detect the connection of a new device to the LAN, and running as background processes (sometimes known as "daemons"). These servers may include an address resolution protocol monitor ("arpwatch") and a Dynamic Host Configuration Protocol daemon ("DHCPd"). These are used to trigger a new device detection processor 14 which has an associated "known device" database 141, an online installation database 142 and a Device fingerprint database 143.
An identification processor 140 provides data to the installation application 16 for any devices not using fingerprint data..

A database 141 of devices previously identified by the detection system 14 resides on the router's flash storage and is kept in persistent storage. A device detection database 19 maintains data on different browser systems

The router also maintains a store 12 of information to be made available to a user terminal 2 to assist in the installation process, and a store 13 of Hypertext Usenet Reader & Linker (HURL) pages.

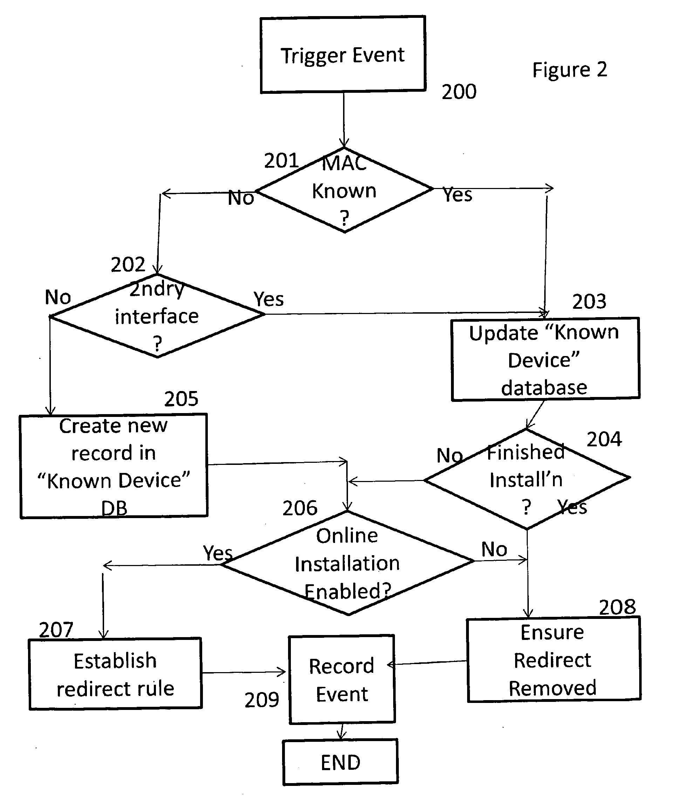

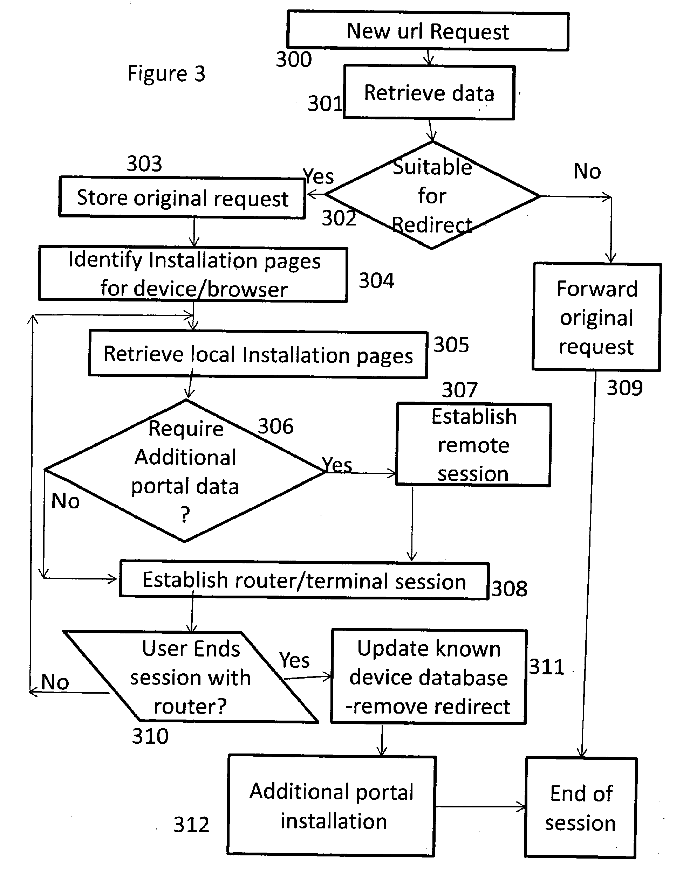

The operation of the process according to the invention will now be described with reference to Figures 2 and 3.

The new device detection process 14 is based on detection of new MAC addresses on the LAN Ethernet or LAN Wifi Interface, and is depicted in the flow chart of Figure 2.

Data from the DHCP (Dynamic Host Configuration Protocol ) server which can be part of the monitor 10 on the router 1 or data from other sources in the "new device" monitor 10 is used to detect new devices on the LAN. A fingerprint that may be based on the DHCP options presented by the device can be used to identify known devices. Alternatively, if a e.g. a static IP address is configured on the device or IPv6 auto configuration is used, detection can be based e.g. on an address resolution protocol, or IPv6 auto configuration data monitor. For such devices all traffic will be redirected and the detector will look for suitable http packets to identify if the installer can be run for those. If this is the case, the packet forwarding 15 is instructed to redirect all sessions for this device..

This process is triggered (Step 200) by the detection of a new device 2 being connected to the router 1 through the local area network. When a device is detected for which online installation processing is available, a redirection can then be put in place. In one embodiment of the invention, a redirection for all new devices will be put in place; in that case device detection is based on user agent information sent by the device in a connection request to the "internet"

The New Device detection processor 14 configures HTTP traffic from new devices 2 to be redirected by the Packet Forwarding processor 15 to the online installation application 16. If the online installation application 16 determines that the stream is not to be redirected, for example because the device is of a type not suitable for installing the capability, the proxy type functionality of the packet Forwarding processor 15 allows the packets to be routed unmodified to their original destination.

Several different mechanisms may be employed to ensure all new devices are detected. For example the DHCP server monitor 10 triggers the new device detection with every DHCP request it receives, making all data-including content in the DHCP options field, assigned IP address, Interface the Request was received on, etc available to the New Device Detection process 14.

The new device detection process uses the option fields and data within the options in conjunction with the DHCP fingerprint database 143 to determine whether the Device/OS is known, (step 201) and updates the known device database 141 accordingly (step 203) if it is already known.

Similarly, the monitor 10 uses address resolution protocol or IPv6 auto configuration to identify new devices which do not make use of DHCP, e.g. devices configured with static IP addresses or IPv6 auto configuration. The monitor 10 passes the new (so far unknown) MAC Address including IP Address to the New Device Detection processor 14.

These detection monitoring systems are examples. Further trigger mechanisms to detect new devices may also be used by the monitoring function 10.

The detection processor next checks if the new MAC address that became available belongs to a device that is already known. This is done to detect "secondary' interfaces of that device. A primary interface is the interface the device used to do the first connection to the router. Any other interface the device may use to connect subsequent to connection with the primary interface will be called a 'secondary interface'. The mechanism to determine a secondary interface could be the hostname provided in the DHCP request of the new interface. If it contains a hostname that is identical to the hostname of a record in the known database (step 201), to identify devices which have previously connected using a different interface (step 202), and updates the known device database 141 appropriately if this is the case (step 203).

In the event that the device attempting connection is a previously unknown device, a new record is added to the Known Device Database 141 (step 205) which will therefore contain information relating to all devices that have been connected to the router through a LAN interface 24. This includes devices that receive their IP address via DHCP, autoconfiguration, or via static configuration. This database can then be used by multiple applications on the router. The database may contain additional information e.g. about DHCP lease time, Device activity status, Device class, OS, etc.

The New Device Detection processor 14 can therefore keep the Known Device Database 141 updated with new information, in order to keep the known device database up to date and to allow other applications (e.g. diagnostic) to make use of up to date data.

The 'Known Device Database' is used to determine if a device has been seen by this Router before. The Known Device Database 141 records the following information for each device:
○ MAC Address of the device (the first to be detected if the device has multiple Interfaces)
○ The last known IP Address of the Interface (used for diagnostics)
○ Any recorded secondary Interfaces: for example a Laptop may have an Ethernet Interface, built in Wifi and a USB Wifi Interface, each with different MAC addresses.
○ MAC address of any secondary interface detected, together with port, and last IP address relating to that secondary interface.
○ Status of the device, i.e if it is still actively connected to the Router.
○ Timestamp of the last time the device was seen.
○ Hostname (e.g. received via DHCP)
○ DeviceType - determined by the Router during the online installation process
○ Operating system - typically determined by the Router during the online installation process
○ DHCP fingerprint information - if IP address received via DHCP (for diagnostic services)

The Device Detection Database 19 contains the information specific to the online installation process relating to devices 2 that have been connected to the Router 1 through the LAN interface 24. This includes the network address and URL of the online installation process server 20 appropriate to each device recorded in the known device database 141.

The Installation database 142 contains information about the installation status of each device that has been connected to the router. It uses the MAC addresses in the Known devices database 141 as a reference to its records. It may capture the following information
- Installation process started (including a timestamp)
- Redirection in progress
- Installation process finished (including a timestamp)
- Error conditions

The Device detection database 19 contains information that allows identification of the browser 26 which generated it, from a HTTP GET request received by the online installation process application 16,. It is also used to identify the operating system and device type for devices that are not detected by a DHCP fingerprint, and information on which installation pages to serve to that device class and browser.

The DHCP Fingerprint Database 143 contains information that is used to identify a known OS/device 2 based on the Options and their values sent as part of the DHCP request from that device. The DHCP fingerprint database 143 is used by the device detection application 14 to identify operating systems and devices, and contains information relating to whether they are supported by the online installation process, and maintains the DHCP Options and expected Value for the specific Operating system ("fingerprint" information). The Browser/Device Detection Database 19 is used by the online installation process Application 16 to attempt to identify the browser 26 from which it has received a HTTP GET request in circumstances where it is not possible to identify the operating system from the DHCP fingerprint 143. This detection may instead be done in the Device/Browser identification processor 140.

They both hold the information on specific devices (e.g. make and model) and browsers. The detection database 19 also holds the User Agent Headers of supported browsers, and the operating system which the Browser that generated the User Agent Header runs under, to allow identification of the device. The DHCP database 143 holds device-specific information on whether the individual device is to undergo the installation process, for example to identify peripherals such as Internet Radios, printers, game consoles, etc.

The known device database 141 may be updated from the New Device Detection application 14 and the online installation process application 16 to contain the MAC address and other information of any device that the Router recognized on the LAN interface 24.

The Router 1 stores web pages 18 to support the online installation process. These pages can be specific to each device class and browser, and are retrieved by the installation application 16 and served to the device 2 according to the device identified from the known device database 141 and from the browser 26 identified from the HTTP user agent header of the browser's GET request. Typically, the router will serve an initial 'new device detected page' to inform the user that a new device has been detected for which an installation could be provided. It may already offer download and installation of software (such as a Help service application), and other pages which may offer the user one or more Active Choices to install optional features such as Parental Control Software, or it may redirect the browser session to a Portal installation 20 or login page upon user feedback to the initial page.

Once a new device has been detected, a redirect rule is put in place (step 207) that temporarily redirects all HTTP traffic received at the router 1 from the newly-detected device 2 to the Online installation application on the router 1., which provides the online installation process. This redirect rule normally applies only during the installation process, and is then removed so that traffic for any device which has already finished the online installation process on the Router 1 will not be redirected. This function 207 can also be set to cause devices to be redirected to the installation process even if they are known to the database 141 (step 204) (referred to herein as "hijacking") . This allows devices to be updated with new information in the event that the online VAS portal 20 has such data available.

The online installation process may serve any combination of pages and content which are hosted either on the router 1 or on a webserver on the 'Internet' like e.g. the VAS portal 20.

Conversely, redirection can also be over-ruled (step 208) for an individual device, if the installation process has been disabled (step 206). This may be done, for example, if the user does not wish to make use of individual online installation The installation process may also be temporarily disabled e.g by closure of a pop-up window to allow an on-site technician to make changes. It may be re-enabled automatically after the changes have been made e.g after a pre-set time or by action by the technician.

The traffic that gets redirected to the online installation process application 16 is analysed by that application. HTTP GET requests are further analysed to identify if the application running on the LAN side connected device is a browser recorded on the 'Known Browser Database' 141. If the browser used cannot be identified, the HTTP GET gets sent, without modification, to the original destination via the WAN Interface. Similarly, all traffic other than http "GET" requests is also forwarded, without modification, to the original destination via the WAN Interface 25.

As shown in Figure 3, when a data request is transmitted from a terminal 2 to the router 1 over the LAN 24, (step 300) the packet forwarding server 15 checks (step 301) to determine if redirection has been set (see step 207, Figure 2) for that terminal. This will normally be the case for a device suitable for downloading the installation process after it is first connected to the router through the LAN.

When the online installation process application 16 receives the packets that have been redirected to it, it first determines if the device could be an unsupported device. All packets which are not a hypertext transfer protocol "GET" instruction, or that do not contain a User Agent Header, or where the user agent header cannot be identified by comparison with the data stored in the browser detection database 19, are proxied/forwarded by the Router to the original Address without modification of the packet (step 302).

If redirection is not set, the packet forwarding server 15 passes data request into the WAN 25 as normal (step 309). Otherwise, if there is a "get" function and the Browser/Device is identified, the Known Device Database gets updated accordingly.

If redirection is set, the original URL submitted by the user 2 is stored (step 303), to present a second access attempt to the user later, e.g. after the installation process has been completed.

The online installation application 16 controls the Online Installation process. The application 16 ensures that only packets which could provide a suitable installation experience to the user will be redirected.

The installation application processor 16 retrieves data relating to the device 2 from which the request was received from a device detection database 19, (step 302) and identifies the appropriate version of the installation data stored in the device pages 18 (step 304).

A browser session that is to receive the Online Installation process is redirected to the appropriate "landing" or "front" page served from the router 1 (step 305). Appropriate pages for each device type/class and browser type are provided by the router.

The browser 26 then determines whether the installation process requires interaction with the online portal 20 (step 306) e.g. to provide additional content, and establishes a session between the browser 26 and the portal 20 if required (step 307), it may also fetch additional content between the router 1 and the terminal 2 (step 308).

As part of the online installation process, pages specific to each device type are served to the device from the Router 1. These pages can be constructed of standard html, images, Javascript, CSS and may also contain sections that fetch additional rich content from a cloud based URL (307). The layout and technology used on the page are targeted towards the specific devices and browser, specific pages per device class will be available and served. Some of the pages may include hyperlinks, e.g. to download a desktop help installation file.

The installation process then operates as a session 308 between the router 1 and terminal 2, with the router mediating, any interaction required with the portal 20 over the WAN 25 (step 307). The later parts of the session may be dependent on the user response to earlier parts - for example user pages relating to parental control functions are only transmitted to the user if the user indicates that they are required. The mediation process includes determining whether an interaction should be made: for example if the known device database 141 has recorded alteration of certain settings in relation to the terminal 2 as being subject to administrator control, alteration of those settings is not offered unless the user is proved to have administrator rights.

The pages served from the router and portal, and the mechanisms used in them will now be described. The pages served from the Router and the mechanisms used in them can be specific to the device 2 and browser 26 from which the access attempt is to be made, and provide the user with information on how to configure that device and browser to access various online services. This information may include hyperlinks allowing the user to select, access and configure applications, either from a store on the router or from a remote source (step 307), to configure the device and its browser according to the user's requirements.

Typically, the user's browser session is initially redirected to a first online installation process page. Different version of this page will be provided for different devices and operating systems. The page may provide
- a greeting to the user, with an explanation of the redirect process that has brought the user to this page
- what options the user has
- instructions for download of applications and help capabilities
- instructions to the user to allow him to continue to the next page (or one of several options)
- a "hidden" or password-protected link to allow a technician with the correct access permissions to access further pages or online processes., or disable the redirect for a certain time.

The options to download applications such as DeskTop Help are preferably only offered if the application has not been installed on the Device previously.

Once the user selects the "continue" option on the first page, additional pages may be served from the Router; these pages may again be enriched by content retrieved from the portal 20. An example of such an additional page would be one offering installation of parental control to the device, with buttons that allow the user to 'Opt in' or 'opt out' of the service.

The session continues with more pages being called (steps 305-308) until the user selects the exit criteria (e.g. a specific Hyperlink) on one of the pages, which terminates the session with the router (step 310).

Once the user has completed the process by selecting one of the 'exit' buttons on the last page to be presented to him from the router (step 310), the redirect rules for the device are removed, at which point the "known device" 141 database is updated (step 311) and the browser session gets redirected to a URL providing the landing page (portal) for the cloud based portion of the online installation process (step 312) .

The pages served from the Router may contain a (hidden) link to a technician installation. When this hidden link is selected, the browser is commanded to e.g. open a new popup Window and open a technician's page. This popup window is used to control Start and End of the technician's mode. These pages may offer the technician download links, test capabilities, and installation-specific pages (e.g. a checkbox Modem installed successfully, 'Router installed successfully'). They may also disable the redirect on the router for a specific time.

Dependent on the device the Router may serve additional pages to the user, e.g. a page offering 'Active Choice for Parental Control', or additional installations/configuration .

When the Browser session exits the pages served from the Router, the online installation process Database 142 is updated. The forwarding rule in the Packet forwarder 15 that redirects traffic for that device is removed.

Multiple exit routes may be provided, for example to allow tracking of a user's choice by providing separate exit buttons according to whether, for example, Parental Control parameters are to be installed. The choice of exit route determines the value of URL transmitted to the VAS portal.20, or the parameters attached to that url.

Devices that are not capable of successful operation of an online installation process (e.g. Internet Radios, game consoles, PC running an unsupported Operating system) are classified as unknown devices in the 'Known Device Database' 141. This is done to allow the Router to remove the redirect rule, to reduce the processing overhead for packets sent from that device.

One method of detection of unsupported devices is by using a timeout mechanism that will classify the device in case the device has not successfully finished installation on the router within a certain time - e.g. one week.

The redirect of the browser request of a new device is removed when the user leaves the pages served from the Router. If the user fails to exit the page using correct exit button, the device remains in redirect mode, and the user will not be able to access any web content on the Internet with that device until the installation process has been repeated and concluded properly.

Some parts of the online installation process 16 could be updated independently of the full firmware installed on the router 1, to update the process 16, add new device types to the device detection database 19, update the fingerprint database, and for management of individual entries of the databases 141, 142, 143.

Troubleshooting applications 23 may access the online installation process database 142 or other databases on the router 1 to query for information when the user makes use of the installed application, and may update the database with information or add additional fields to the database. These may feed data to a data management system 21, which communicates with a supervisory system 17 installed in the router 1 to model and monitor its operation.

## Claims

1. A network connection device for connection of one or more data processing devices to a data network, the network connection device being arranged to configure the data processing devices to operate predetermined functions, the network connection device comprising:
a detection processor arranged to identify data processing devices that require such configuration when they attempt connection to an external network via the network connection device and the data network,
an installation processor for controlling a communications data session with the data processing device to configure the device to operate the predetermined functions, the configuration process being determined in accordance with the identified characteristics of the data processing device.

2. A network connection device according to claim 1 in which the installation processor is arranged to load a further installation processor onto the data processing device, such that when executed on the device the further installation processor configures the device to operate the predetermined functions.

3. A network connection device according to Claim 1 or Claim 2, comprising a store for data relating to data processing devices that have previously been connected, the detection processor being arranged to determine, from the stored data, whether a data processing device currently attempting connection requires configuration.

4. A network connection device according to claim 3, comprising a further store for data relating to availability of update data, the detection processor being arranged to determine whether a previously-connected data processing device requires the configuration process to be performed to incorporate such update data.

5. A network connection device according to claim 1, claim 2, claim 3 or claim 4 wherein the network connection device comprises a device identification processor arranged to analyse data received from the data processing devices, and to determine, from the data received in respect of each data processing device, whether the configuration process is to be applied to the data processing device.

6. A network connection device according to any of the preceding claims, further comprising a detector for determining if a data communication device attempting connection through a data connection interface has been previously connected to the same network connection device using a different data connection interface.

7. A network connection device according to claim 1, claim 2, claim 3, claim 4, claim 5 or claim 6, being arranged to communicate with one or more data processing devices through a local area network and with one or more remote servers over an external network connection, and arranged to mediate an installation application session operating between a data communications device and a remote server over the local area network and external network.

8. A network connection device according to any preceding claim, further comprising a programmable store for receiving program data for operating the configuration process from a remote server over an external network connection.

9. A method for configuring a data processing device to operate predetermined functions, **characterised in that** the configuration of the data processing device is performed under the control of a network connection device when the data processing device establishes connection with the network connection device over a data network, and wherein the network connection device
identifies a data processing device when it attempts connection to an external network via the network connection device and the data network,
determines, from characteristics of the data processing device and stored data relating to the device, whether the data processing device requires such configuration,
and, if the data processing device requires configuration, redirects a communications data session with the data processing device to configure the device to operate the predetermined functions, the configuration process being determined in accordance with the identified characteristics of the data processing device.

10. A method according to claim 9, wherein the network connection device stores data relating to data processing devices that have previously been connected and determines, from the stored data, whether a data processing device currently attempting connection requires configuration.

11. A method according to claim 10, wherein the network connection device stores data relating to availability of update data and the determination process determines whether a previously connected data processing device requires the configuration process to be performed to incorporate such update data.

12. A method according to claim 9, claim 10, or claim 11 wherein the network connection device analyses data received from the data processing devices and determines from the data received whether the data processing device is of a type requiring configuration.

13. A method according to claim 9, claim 10 claim 11 or claim 12, wherein the session initiated by the network connection device is a session between the data processing device and a remote server, the remote server being connected to the network connection device over an external network connection and the data communications device being connected to the network connection device over a local access network.

14. A method according to claim 9, claim 10, claim 11, claim 12, or claim 13, wherein program data for the configuration process is downloaded by the network communication device from a remote server over an external network connection

15. A method according to claim 14, wherein if the data stored by the network connection device in respect of a data communications device indicates that it has not been connected to the network connection device since the most recent download of data from the remote server, the configuration process is performed.
